# EUROPÄISCHE PATENTANMELDUNG

(11) **EP 1 741 912 A2**
(43) Veröffentlichungstag der Anmeldung: **10.01.2007**
(21) Anmeldenummer: 06009498.4
(22) Anmeldetag: 09.05.2006
(51) Int. Cl.: F02D 41/40

(54) **Verfahren und Vorrichtung zur Steuerung eines Kraftstoffeinspritzsystems für eine Brennkraftmaschine eines Fahrzeugs**

(30) Priorität: 05.07.2005 DE 102005031253
(71) Anmelder: Dr.Ing. h.c.F. Porsche Aktiengesellschaft, 70435 Stuttgart (DE)
(72) Erfinder: Müller, Stephan, 71229 Leonberg (DE)

(57) **Zusammenfassung**

Die vorliegende Erfindung schafft ein Verfahren und eine Vorrichtung zur Steuerung eines Kraftstoffeinspritzsystems für eine Brennkraftmaschine eines Fahrzeugs, wobei die Brennkraftmaschine einen Common-Rail (1), eine Hochdruckpumpe (2), ein Mengensteuerventil (3) zur Steuerung der Kraftstoff-Fördermenge der Hochdruckpumpe (2) in den Common-Rail (1) und ein Steuergerät zur Ansteuerung des Mengensteuerventils (3) aufweist, wobei das Verfahren die Schritte des Ermittelns des aktuellen Kraftstoffbedarfs (KSB) in dem Common-Rail (1) in Abhängigkeit des aktuellen Fahrzustandes des Fahrzeugs und des Steuerns von Tastverhältnis und Frequenz der Ansteuerung des Mengensteuerventils (3) in Abhängigkeit des ermittelten aktuellen Kraftstoffbedarfs (KSB) in dem Common-Rail (1) aufweist.

## Beschreibung

Die vorliegende Erfindung betrifft ein Verfahren und eine Vorrichtung zur Steuerung eines Kraftstoffeinspritzsystems für eine Brennkraftmaschine eines Fahrzeugs.

Der Anmelderin sind Kraftstoffeinspritzsysteme bekannt, welche einen Druckspeicher ― im Folgenden als Common-Rail bezeichnet - , eine Hochdruckpumpe, ein Mengensteuerventil zur Steuerung der Kraftstoff-Fördermenge der Hochdruckpumpe in den Common-Rail und ein Steuergerät zur Ansteuerung des Mengensteuerventils aufweisen.

In der DE 198 34 120 ist zudem ein Kraftstoffeinspritzsystem mit einem Mengensteuerventil beschrieben, welches den Druckaufbau in dem Common-Rail steuert. Derartige Mengensteuerventile werden insbesondere bei direkt einspritzenden Brennkraftmaschinen verwendet.

In der DE 199 12 966 A1 ist ein Kraftstoffeinspritzsystem beschrieben, bei dem der Druck im Common-Rail durch eine geeignete Steuerung des Mengensteuerventils erfolgt. Das Mengensteuerventil ist auf der Saugseite der Hochdruckpumpe angeordnet. Solange das Mengensteuerventil geöffnet ist, kann die Hochdruckpumpe Kraftstoff ansaugen, dessen Druck erhöhen und anschließend in den Common-Rail fördern.

Bei den obigen Ansätzen hat sich jedoch die Tatsache als nachteilig herausgestellt, dass eine Ansteuerung des Mengensteuerventils in Abhängigkeit des Pumpenhubs der Hochdruckpumpe, d.h. pumpenhubsynchron erfolgt. Bei einer Einkolbenhochdruckpumpe, welche zur Erzeugung des Kraftstoffhochdrucks bei einer Benzindirekteinspritzung eingesetzt und von der Brennkraftmaschine direkt angetrieben wird, erfolgt der Antrieb der Hochdruckpumpe über eine Nockenwelle mit einem oder mehreren Ansteuernocken.

Mit steigendem Durchmesser und steigendem Hub des Kolbens der Einkolbenhochdruckpumpe sowie mit steigender Anzahl der Steuernocken auf der Nockenwelle wird die maximale Fördermenge der Pumpe erhöht. Im Allgemeinen werden zwei Steuernocken oder für eine größere Kraftstofffördermenge drei Steuernocken pro Nockenwellenumdrehung auf der Nockenwelle eingesetzt. Bei einer gleichmäßigen, pumpenhubsynchronen Ansteuerung des Mengensteuerventils gemäß den obigen bekannten Ansätzen muss allerdings bei jedem Nockenhub das Mengensteuerventil phasengerecht angesteuert werden, da durch die Festlegung des Zeitpunkts der Ansteuerung des Mengensteuerventils die Steuerung der Kraftstoff-Fördermenge bewerkstelligt wird.

Es besteht bei diesen Ansätzen somit ein Nachteil darin, dass die Anzahl der Steuernocken auf der Nockenwelle und somit die maximale Fördermenge insbesondere bei hohen Motordrehzahlen aufgrund zu hoher Ansteuerfrequenzen beschränkt ist.

Um die maximale Kraftstoff-Fördermenge zu vergrößern und auch bei hohen Motordrehzahlen eine phasengerechte Ansteuerung gewährleisten zu können, ist der Anmelderin der Ansatz bekannt, anstatt einer Hochdruckpumpe, welche über eine Nockenwelle mit vier Steuernocken angesteuert wird, zwei parallele Hochdruckpumpen mit jeweils zwei Steuernocken vorzusehen.

An diesem Ansatz hat sich jedoch die Tatsache als nachteilig herausgestellt, dass eine parallele Anordnung von zwei oder mehr Hochdruckpumpen einen erhöhten Bauraumbedarf, einen erhöhten Regelaufwand erhöhte Herstellungskosten sowie einen vergrößerten Herstellungsaufwand zur Folge hat.

Somit liegt der vorliegenden Erfindung die Aufgabe zugrunde, ein verbessertes Verfahren und eine verbesserte Vorrichtung zur Steuerung eines Kraftstoffeinspritzsystems zu schaffen, welche auch bei hohen Motordrehzahlen eine genaue Steuerung der gewünschten Kraftstoff-Fördermenge gewährleisten.

Diese Aufgabe wird erfindungsgemäß durch das Verfahren mit den Merkmalen gemäß Patentanspruch 1 bzw. durch die Vorrichtung mit den Merkmalen gemäß Patentanspruch 11 gelöst.

Die der vorliegenden Erfindung zugrunde liegende Idee besteht darin, ein Verfahren und eine Vorrichtung zur Steuerung eines Kraftstoffeinspritzsystems für eine Brennkraftmaschine eines Fahrzeugs bereitzustellen, wobei die Brennkraftmaschine einen Common-Rail, eine Hochdruckpumpe, ein Mengensteuerventil zur Steuerung der Kraftstoff-Fördermenge der Hochdruckpumpe in den Common-Rail und ein Steuergerät zur Ansteuerung des Mengensteuerventils aufweist, wobei der aktuelle Kraftstoffbedarf in dem Common-Rail in Abhängigkeit des aktuellen Fahrzustandes des Fahrzeugs mittels einer Erfassungseinrichtung erfasst und das Tastverhältnis der Ansteuerung des Mengensteuerventils in Abhängigkeit des ermittelten aktuellen Kraftstoffbedarfs in dem Common-Rail mittels des Steuergerätes gesteuert wird, wobei die Steuerung zeitsynchron und unabhängig von dem Pumpenhub der Hochdruckpumpe ausgeführt wird.

Somit weist die vorliegende Erfindung gegenüber den bekannten Ansätzen den Vorteil auf, dass die Steuerung des Tastverhältnisses der Ansteuerung des Mengensteuerventils nicht pumpenhubsynchron, sondern zeitsynchron in Abhängigkeit des ermittelten aktuellen Kraftstoffbedarfs durchgeführt wird. Somit kann die Frequenz zur Ansteuerung des Mengensteuerventils von der Pumpenhubfrequenz entkoppelt und gegebenenfalls verringert sowie eine Hochdruckpumpe durch eine Nockenwelle mit beispielsweise vier Steuernocken auch bei hohen Drehzahlen angesteuert werden. Die maximale Fördermenge kann durch Verwendung von beispielsweise vier Steuernocken vorteilhaft erhöht werden, ohne dass Synchronisationsprobleme auftreten.

In den Unteransprüchen finden sich vorteilhafte Ausgestaltungen und Verbesserungen des im Patentanspruch 1 angegebenen Verfahrens bzw. der im Patentanspruch 11 angegebenen Vorrichtung.

Gemäß einer bevorzugten Weiterbildung wird der Kraftstoffdruck in dem Common-Rail mittels eines Drucksensors erfasst, wobei der aktuelle Kraftstoffbedarf in dem Common-Rail durch einen Vergleich des erfassten Kraftstoffdrucks mit einem Solldruck ermittelt wird. Beispielsweise sind entsprechende Soll-Drücke in einem Kennfeld in einer zugeordneten Speichereinrichtung abgelegt. Somit wird auf einfache Weise durch einen Soll-/Ist-Druck-Vergleich der aktuelle Kraftstoffbedarf in dem Common-Rail erfasst, so dass die Steuerung des Tastverhältnisses der Ansteuerung des Mengensteuerventils zum Bereitstellen einer geeigneten Kraftstoff-Fördermenge an den Common-Rail an den erfassten Kraftstoffbedarf angepasst werden kann.

Gemäß einem weiteren bevorzugten Ausführungsbeispiel wird die Brennkraftmaschine als Vier-Takt-Motor eines Kraftfahrzeuges ausgebildet, wobei die Hochdruckpumpe zum Ausführen mehrerer Förderphasen während eines Arbeitsspiels eines Zylinders der Brennkraftmaschine ausgebildet wird. Die Hochdruckpumpe ist vorzugsweise als Einkolbenhochdruckpumpe ausgestaltet. Unter einem Arbeitsspiel einer nach dem Vier-Takt-Verfahren arbeitenden Brennkraftmaschine wird im Zusammenhang mit der vorliegenden Erfindung ein Kurbelwinkel von 720° verstanden, da innerhalb dieses Kurbelwinkels die vier Takte einer Brennkraftmaschine ― Ansaugen, Verdichten, Arbeiten und Ausstoßen ― ablaufen.

Nach einer weiteren bevorzugten Weiterbildung wird das Tastverhältnis der Ansteuerung des Mengensteuerventils in Abhängigkeit des erfassten Kraftstoffdrucks in dem Common-Rail und in Abhängigkeit der Drehzahl der Brennkraftmaschine gesteuert. Dadurch kann das Tastverhältnis der Ansteuerung des Mengensteuerventils in Abhängigkeit des aktuellen Fahrzustandes des Fahrzeugs geeignet gesteuert werden, wobei sowohl die aktuelle Drehzahl als auch die aktuelle Motorbelastung bei der Ansteuerung des Tastverhältnisses vorteilhaft mit berücksichtigt werden.

Vorzugsweise werden bis zu einer vorbestimmten Grenzdrehzahl der Brennkraftmaschine vier Förderhübe der Hochdruckpumpe vorgegeben, wobei das Mengensteuerventil mit einer vorbestimmten Grundfrequenz in Abhängigkeit des Pumpenhubs gleichmäßig, d.h. pumpenhubsynchron angesteuert wird. Dadurch erfolgt in dem unkritischen Motordrehzahlbereich bis zu der Grenzdrehzahl eine Ansteuerung des Mengensteuerventils mit einer in diesem Motordrehzahlbereich noch unkritischen Ansteuerfrequenz. Vorteilhaft wird erst ab der vorbestimmten Grenzdrehzahl der Brennkraftmaschine das Tastverhältnis der Ansteuerung des Mengensteuerventils in Abhängigkeit des ermittelten aktuellen Kraftstoffbedarfs in dem Common-Rail gesteuert. Das Tastverhältnis wird demnach nicht pumpenhubsynchron sondern zeitsynchron und Abhängigkeit der augenblicklichen Motorbelastung gesteuert. Somit kann bei einer kritischen Motordrehzahl, d.h. ab der vorbestimmten Grenzdrehzahl, beispielsweise die Ansteuerfrequenz des Mengensteuerventils auf geeignete Weise verringert werden, ohne dass die augenblicklich geforderte Kraftstoff-Fördermenge unterschritten wird.

Gemäß einem weiteren bevorzugten Ausführungsbeispiel wird ab der vorbestimmten Grenzdrehzahl der Brennkraftmaschine die Frequenz zur Ansteuerung des Mengensteuerventils gegenüber der vorbestimmten Grundfrequenz derart auf den halben Wert verringert, dass das Mengensteuerventil bei jedem zweiten Förderhub der Hochdruckpumpe angesteuert wird. Dadurch wird auch bei hohen Motordrehzahlen eine ausreichende Zeit für eine genaue Ansteuerung des Mengensteuerventils zur Verfügung gestellt und eine zufriedenstellende Ansteuerung gewährleistet. Bei einem hohen Kraftstoffbedarf in dem Common-Rail wird das Tastverhältnis der Ansteuerung des Mengensteuerventils ab der vorbestimmten Grenzdrehzahl der Brennkraftmaschine vorzugsweise derart gesteuert, dass das Mengensteuerventil bei jedem zweiten Förderhub der Hochdruckpumpe für einen Vollförderhub und bei den dazwischen liegenden Förderhüben der Hochdruckpumpe für Regelhübe angesteuert wird. Alternativ wird bei einem niedrigen Kraftstoffbedarf in dem Common-Rail das Tastverhältnis der Ansteuerung des Mengensteuerventils ab der vorbestimmten Grenzdrehzahl der Brennkraftmaschine vorzugsweise derart gesteuert, dass das Mengensteuerventil bei jedem zweiten Förderhub der Hochdruckpumpe für einen Nullförderhub und bei den dazwischen liegenden Förderhüben der Hochdruckpumpe für Regelhübe angesteuert wird.

Bei einem Kraftstoffzwischenbedarf zwischen dem hohen und dem niedrigen Kraftstoffbedarf in dem Common-Rail wird das Tastverhältnis der Ansteuerung des Mengensteuerventils vorzugsweise ab der vorbestimmten Grenzdrehzahl der Brennkraftmaschine vorzugsweise durch eine Mischsteuerung gesteuert, welche durch einen Wechselbetrieb der beiden vorher beschriebenen alternativen Steuerbetriebe zusammengesetzt wird. Somit kann ein Hochdrehzahlbetrieb auch mit einer einzigen Hochdruckpumpe, welche durch eine Nockenwelle mit vier Ansteuernocken angesteuert wird, bewerkstelligt werden, d.h. die nutzbare Drehzahlspanne wird vorteilhaft erweitert.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Querschnittsansicht einer Hochdruckförderpumpe eines Kraftstoffeinspritzsystems für eine Brennkraftmaschine, bei welchem sich das Mengensteuerventil in einem nicht-angesteuerten Zustand befindet;
- Fig. 2: eine schematische Querschnittsansicht einer Hochdruckförderpumpe eines Kraftstoffeinspritzsystems für eine Brennkraftmaschine, bei welchem sich das Mengensteuerventil in einem angesteuerten Zustand befindet;
- Fig. 3: eine graphische Darstellung der Motorlast in Abhängigkeit der Motordrehzahl;
- Fig. 4: graphische Darstellungen des Betriebsverhaltens einer Hochdruckpumpe während eines Arbeitsspiels bei einer Motordrehzahl unterhalb der Grenzdrehzahl;
- Fig. 5: eine graphische Darstellung des Betriebsverhaltens einer Hochdruckpumpe bei einem Vollförderbetrieb während eines Arbeitsspiels;
- Fig. 6: eine graphische Darstellung des Betriebsverhaltens einer Hochdruckpumpe bei einem Nullförderbetrieb während eines Arbeitsspiels;
- Fig. 7: eine graphische Darstellung des Betriebsverhaltens einer Hochdruckpumpe bei einer Motordrehzahl oberhalb der Grenzdrehzahl und bei einem hohen Kraftstoffbedarf während eines Arbeitsspiels;
- Fig. 8: eine graphische Darstellung des Betriebsverhaltens einer Hochdruckpumpe bei einer Motordrehzahl oberhalb der Grenzdrehzahl und bei einem niedrigen Kraftstoffbedarf während eines Arbeitsspiels; und
- Fig. 9: ein Flussdiagramm eines erfindungsgemäßen Verfahrens gemäß einem bevorzugten Ausführungsbeispiel der vorliegenden Erfindung.

In den Figuren der Zeichnung bezeichnen dieselben Bezugszeichen gleiche oder funktionsgleiche Komponenten, soweit nichts Gegenteiliges angegeben ist.

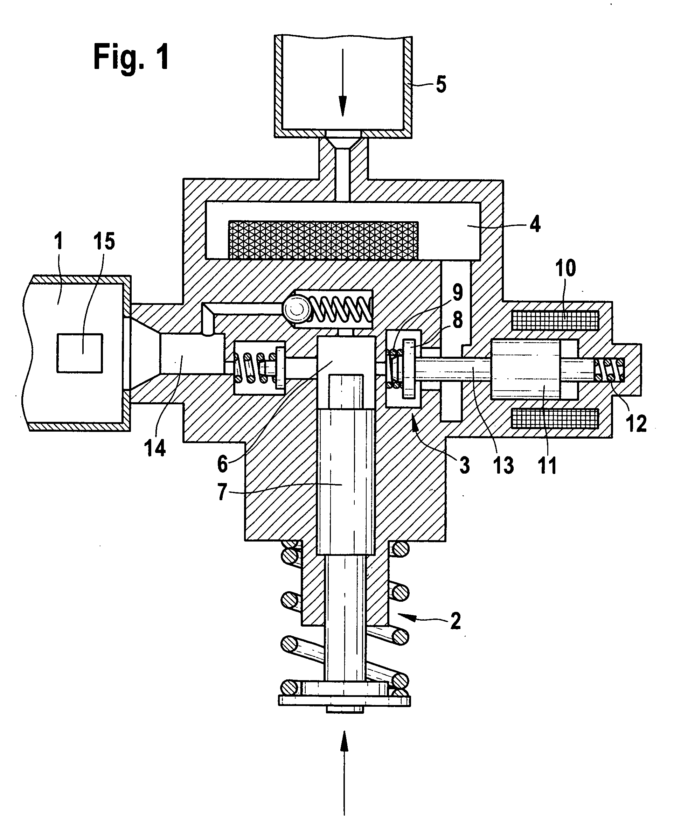

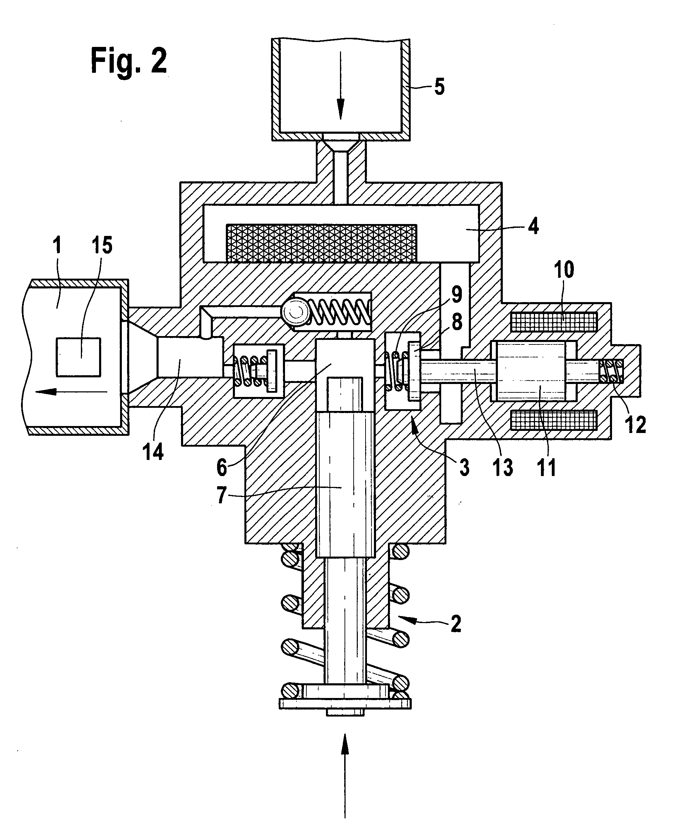

Fig. 1 und Fig. 2 illustrieren jeweils eine schematische Querschnittsansicht der Kraftstoffhochdruckpumpe eines Kraftstoffeinspritzsystems für eine Brennkraftmaschine eines Fahrzeugs gemäß einem Ausführungsbeispiel der vorliegenden Erfindung, wobei die Brennkraftmaschine einen Common-Rail 1, eine Hochdruckpumpe 2, ein Mengensteuerventil 3 und ein Steuergerät zum Ansteuern des Mengensteuerventils aufweist. In Fig. 1 ist das Mengensteuerventil in einem nicht-angesteuerten bzw. unbestromten Zustand und in Fig. 2 in einem angesteuerten bzw. bestromten Zustand dargestellt. Die Hochdruckpumpe 2 ist vorzugsweise als Einkolbenhochdruckpumpe ausgebildet. Eine Einkolbenhochdruckpumpe zeichnet sich durch einen einfachen und robusten Aufbau aus. Die Fördermengen sind äußerst schnell und reproduzierbar im Hochdruckraum regel- bzw. steuerbar.

Das Kraftstoffeinspritzsystem weist ferner Injektoren (nicht dargestellt) auf, welche von dem Common-Rail 1 mit Kraftstoff beaufschlagt werden. Der Common-Rail 1 steht mit der Hochdruckpumpe 2 über eine Hochdruckleitung 14 in Verbindung. Die Hochdruckpumpe 2 wiederum ist mit einer Niederdruckleitung 4 verbunden, welche mit einem Kraftstofftank 5 in Verbindung mit einer Niederdruckförderpumpe zum Liefern des Kraftstoffs gekoppelt ist.

Die Hochdruckpumpe 2 weist ferner einen Kolben 7 auf, der in einer Zylinderpumpe gleitend geführt und mit einem Endbereich in die Arbeitskammer 6 ragt. Das von der Arbeitskammer 6 abgewandte Ende des Kolbens 7 wird in Einbaulage vorzugsweise von Steuernocken einer Antriebswelle bzw. einer Nockenwelle beaufschlagt, wodurch der Kolben 7 bei einer Drehung der Antriebswelle entsprechend der jeweiligen Nockenanzahl in eine Hin- und Herbewegung versetzt wird.

Das Mengensteuerventil 3 ist zwischen der Niederdruckleitung 4 und der Arbeitskammer 6 der Hochdruckpumpe 2 vorgesehen. Das Mengensteuerventil 3 besteht beispielsweise aus einem Rückschlagventil 8, welches durch eine Feder 9 vorgespannt ist. Ferner umfasst das Mengensteuerventil 3 eine Magnetspule 10 mit einem Anker 11, der mittels einer Feder 12 federbeaufschlagt ist. Der Anker 11 weist ferner eine Ankerstange 13 auf, die mit dem Rückschlagventil 8 koppelbar ist, so dass das Mengensteuerventil 3 als durch das Steuergerät ansteuerbares Magnetventil ausgebildet ist.

Das in den Fig. 1 und 2 dargestellte Kraftstoffeinspritzsystem arbeitet nun wie folgt: in Fig. 1 ist der nicht-angesteuerte Zustand des Mengensteuerventils 3, d.h. der unbestromte Zustand darstellt, in welchem das Rückschlagventil 8 stets öffnet. In Fig. 2 hingegen steuert das Steuergerät das Mengensteuerventil 3 an, d.h. es erfolgt eine Bestromung des Magnetventils. Im angesteuerten Zustand wird der Anker 11 mitsamt Ankerstange 13 in die Magnetspule 10 hineingezogen, so dass das Rückschlagventil 8 freigegeben wird und in Abhängigkeit des Pumpenhubs öffnet oder schließt.

Der in dem Kraftstofftank 5 enthaltene Kraftstoff wird über die Niederdruckleitung 4 zu der Hochdruckpumpe 2 gefördert. Diese verdichtet den Kraftstoff und fördert ihn bei geschlossenem Mengensteuerventil 3 über die Hochdruckleitung 14 in den Common-Rail 1. Durch Ansteuern der nicht dargestellten Injektoren kann der Beginn und das Ende der Einspritzung von Kraftstoff in einem bestimmten Zylinder gesteuert werden. Diese Steuerung erfolgt abhängig von bestimmten Betriebskenngrößen der Brennkraftmaschine.

Der Common-Rail 1 weist einen Drucksensor 15 zum Messen des aktuellen Ist-Drucks in dem Common-Rail 1 auf, welcher mit dem Steuergerät signalverbunden ist. Das Mengensteuerventil 3 wird in Abhängigkeit der Abweichung des gemessenen Ist-Drucks von einem Soll-Druck entsprechend angesteuert, was weiter unten ausführlicher erläutert wird. Mittels des Mengensteuerventils 3 kann die von der Hochdruckpumpe 2 geförderte Kraftstoffmenge und damit der Druckaufbau in dem Common-Rail 1 gesteuert werden. Hierzu ist es erforderlich, dass das Mengensteuerventil 3 zu einem bestimmten ersten Zeitpunkt angesteuert und die Ansteuerung zu einem bestimmten zweiten Zeitpunkt zurückgenommen wird, d.h. dass das Tastverhältnis - das Verhältnis von Ansteuerdauer zu Periodendauer - geeignet gesteuert wird.

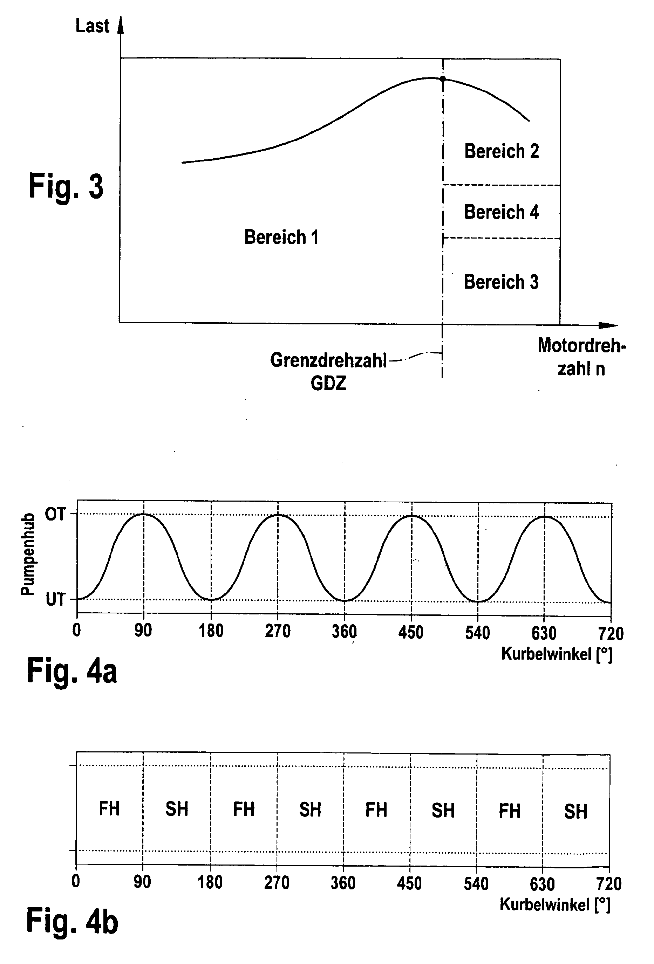

Fig. 3 illustriert eine graphische Darstellung der Abhängigkeit der maximalen Motorlast von der Motordrehzahl n. Die Motorlast ist ca. proportional zum Kraftstoffbedarf pro Arbeitsspiel in dem Common-Rail 1. Wie in Fig. 3 ersichtlich ist, steigt die maximale Last und somit der maximale Kraftstoffbedarf pro Arbeitsspiel in dem Common-Rail 1 mit zunehmender Motordrehzahl n zunächst stetig, d.h. nimmt bei einer Betätigung des Gaspedals anfänglich stetig zu, wobei ab einem Lastmaximum sich der Kraftstoffbedarf pro Arbeitsspiel mit weiter steigender Motordrehzahl n wieder etwas verringert. Dies liegt an der Tatsache, dass sich der Luftdurchsatz ab einer bestimmten Motordrehzahl pro Arbeitsspiel verringert.

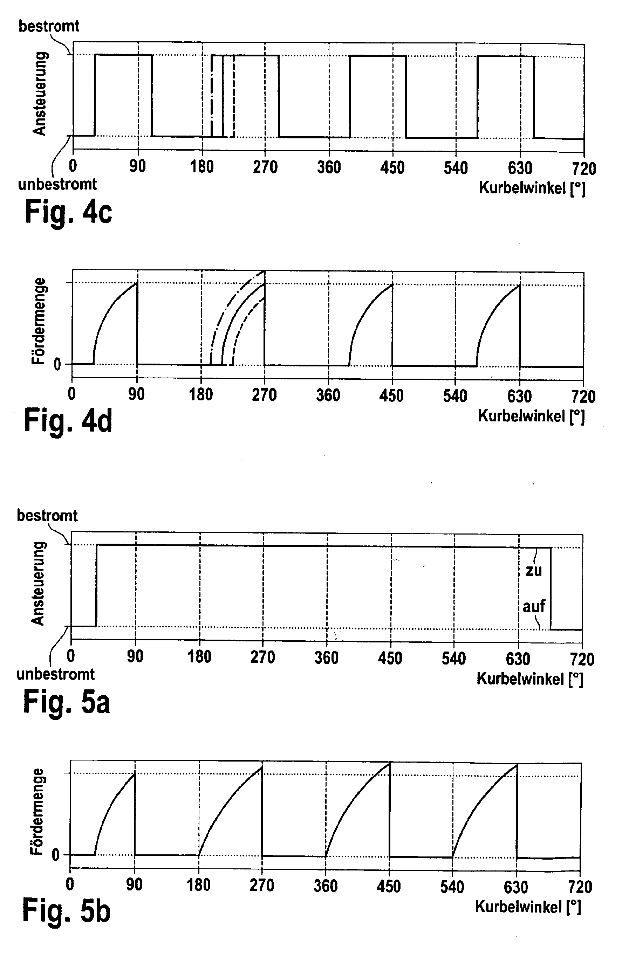

Wie ferner in Fig. 3 ersichtlicht ist, wird vorzugsweise ein Schwellwert bezüglich der Motordrehzahl n, d.h. eine Grenzdrehzahl GZD festgelegt, welche beispielsweise der dem Lastmaximum zugeordneten Motordrehzahl entspricht oder sich im Bereich dieser Motordrehzahl befindet. Bei einer Motordrehzahl n unterhalb der Grenzdrehzahl GDZ erfolgt vorzugsweise eine Ansteuerung des Mengensteuerventils 3 mit der vorbestimmten Grundfrequenz der Motordrehzahl. Dies wird im Folgenden unter Bezugnahme auf Fig. 4 näher erläutert.

Unter einem Arbeitsspiel einer nach dem Vier-Takt-Verfahren arbeitenden Brennkraftmaschine wird im Zusammenhang mit der vorliegenden Erfindung ein Kurbelwinkel von 720° verstanden, da innerhalb eines solchen Arbeitsspiels jeder Zylinder die vier Takte eines Viertaktmotors - Ansaugen, Verdichten, Arbeiten und Ausstoßen - durchläuft.

Figuren 4a bis 4d illustrieren das Betriebsverhalten der Hochdruckpumpe 2 bei einer Motordrehzahl n kleiner als die oben genannte Grenzdrehzahl GDZ, wobei in Fig. 4a der Pumpenhub während eines Arbeitsspiels, in Fig. 4b das Pumpenverhalten während eines Arbeitsspiels, in Fig. 4c die Ansteuerung während eines Arbeitsspiels und in Fig. 4d die Kraftstoff-Fördermenge während eines Arbeitsspiels graphisch dargestellt sind.

Wie in den Fig. 4a bis 4d ersichtlich ist, erfolgt bis zu der Grenzdrehzahl GDZ eine Ansteuerung des Mengensteuerventils 3 in Abhängigkeit des Pumpenhubs für jeden Pumpenhub gleichermaßen, d.h. pumpenhubsynchron. Während jeder Aufwärtsbewegung des Kolbens 7 von dem unteren Totpunkt UT in Richtung des oberen Totpunktes OT, d.h. während jeden Förderhubs FH, erfolgt eine Bestromung des Mengensteuerventils bei einem einheitlichen, vorbestimmten Hubniveau, beispielsweise nach dem halben Kurbelwinkel des Förderhubs FH. Ab dem Zeitpunkt der Bestromung schließt das Mengensteuerventil 3 bei einem Förderhub FH derart, dass eine Kraftstoffmenge in den Common-Rail 1 gefördert wird, solange bis der Kolben 7 den oberen Totpunkt OT erreicht.

Während jeder Abwärtsbewegung des Kolbens 7 von dem oberen Totpunkt OT in Richtung des unteren Totpunktes UT, d.h. während jeden Saughubs SH, erfolgt eine Zurücknahme der Ansteuerung bzw. eine Nicht-Bestromung des Mengensteuerventils bei einem einheitlichen, vorbestimmten Hubniveau, beispielsweise nach dem halben Kurbelwinkel des Saughubs SH, wie in Fig. 4c in Verbindung mit Fig. 4a ersichtlich ist. Bei einem Saughub SH kann pumpenbedingt keine Kraftstoffförderung erfolgen.

Vorzugsweise wird jeweils ein Tastverhältnis der Ansteuerung von 0,5 gewählt, so dass eine gleichmäßige periodische Ansteuerung gewährleistet ist. Der oben beschriebene Zyklus wird für jeden der vier Nocken auf der Nockenwelle gleichmäßig derart durchlaufen, dass vier gleichmäßige Fördermengen bei jedem Förderhub FH des Kolbens 7 gewährleistet werden. Die in den Fig. 4c und 4d dargestellten gestrichelten Linien illustrieren Verschiebungen des Ansteuerzeitpunktes, wobei bei einer früheren Ansteuerung des Mengensteuerventils 3 eine größere Fördermenge und bei einer späteren Ansteuerung des Mengensteuerventils 3 während des Förderhubs FH eine geringere Fördermenge in den Common-Rail 1 gefördert wird. Dies kann zur Steuerung der Gesamtfördermenge während eines Arbeitsspiels ausgenutzt werden, wobei der Ansteuerzeitpunkt durch das Steuergerät in Abhängigkeit des Kraftstoffbedarfs gesteuert werden kann.

Das System bestehend aus Hochdruckpumpe 2 mit Kolben 7 und Mengensteuerventil 3 ist vorzugsweise derart ausgestaltet, dass bei einer Dauerbestromung des Mengensteuerventils 3 gemäß Fig. 5a eine Kraftstoffmengen-Vollförderung gemäß Fig. 5b erfolgt, da sich das Mengensteuerventil 3 während des gesamten Förderhubs FH des Kolbens 7 im geschlossenen Zustand befindet.

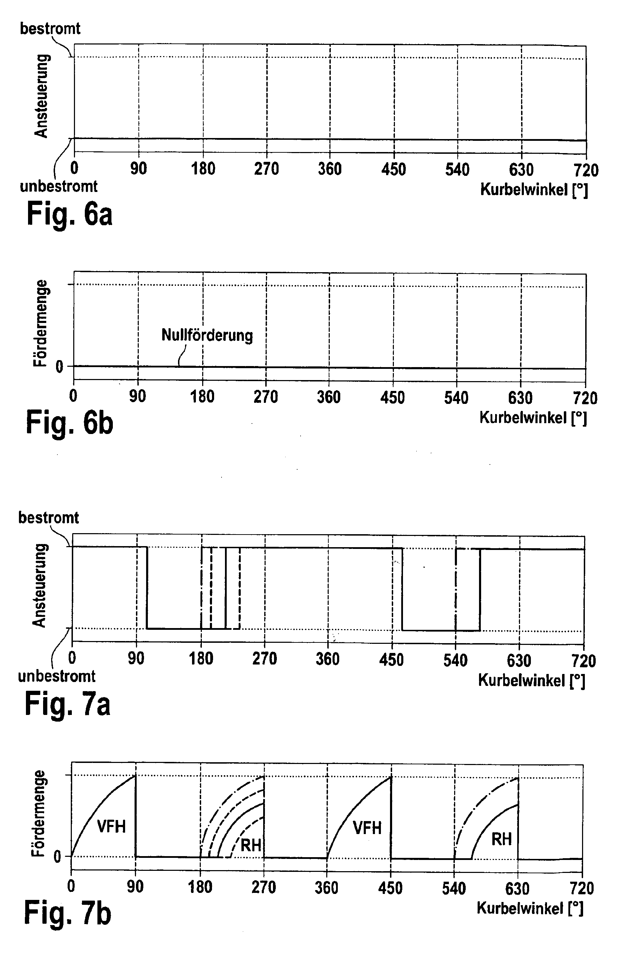

Andererseits erfolgt bei einer Nicht-Bestromung des Mengensteuerventils 3 gemäß Fig. 6a eine Kraftstoffmengen-Nullförderung gemäß Fig. 6b, da sich das Mengensteuerventil 3 während des gesamten Förderhubs FH des Kolbens 7 im geöffneten Zustand befindet und kein Druck in der Arbeitskammer 6 zum Gewährleisten einer Kraftstoffmengenförderung aufgebaut werden kann.

Gemäß einem bevorzugten Ausführungsbeispiel der vorliegenden Erfindung erfolgt eine Ansteuerung des Mengensteuerventils 3 bis zu der vorbestimmten Grenzdrehzahl GDZ gemäß den Fig. 4a bis 4d, d.h. die Ansteuerung erfolgt für jeden Nocken der Nockenwelle und somit für jeden Pumpenhub gleichmäßig bzw. pumpenhubsynchron.

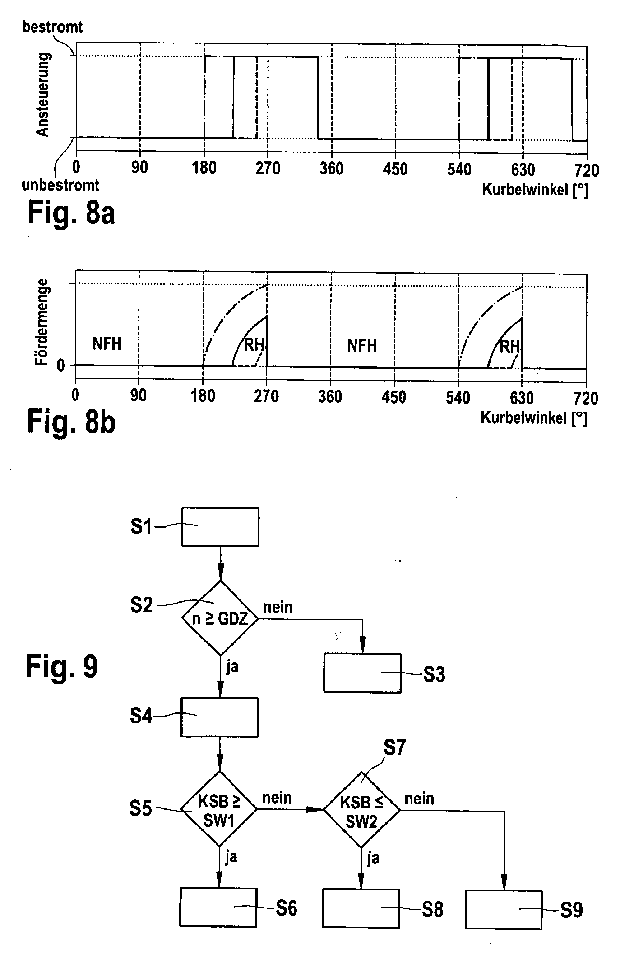

Ab einer Motordrehzahl oberhalb der vorbestimmten Grenzdrehzahl GDZ wird die pumpenhub- bzw. kurbelwinkelsynchrone Ansteuerung des Mengensteuerventils vorzugsweise in eine Ansteuerung umgewandelt, welche nicht länger für jeden Pumpenhub synchron ist, sondern in Abhängigkeit des augenblicklichen Kraftstoffbedarfs in dem Common-Rail 1 festgelegt wird. Dies wird im Folgenden unter Bezugnahme auf die Fig. 7 bis 9 näher erläutert, wobei Fig. 7 einen ersten Ansteuerbetrieb, Fig. 8 einen zweiten Ansteuerbetrieb und Fig. 9 ein Flussdiagramm des erfindungsgemäßen Verfahrens gemäß einem bevorzugten Ausführungsbeispiel darstellen.

In Fig. 9 bezeichnet Schritt S1 das Messen der aktuellen Motordrehzahl n mittels eines Drehzahlmessers, welcher im Allgemeinen in gängigen Kraftfahrzeugsystemen vorgesehen ist. Der Drehzahlmessen ist mit dem Steuergerät für eine Übertragung der gemessenen Motordrehzahl n signalverbunden.

Das Steuergerät vergleicht in dem Schritt S2 die Motordrehzahl n mit der beispielsweise als Kennfelder in einer Speichereinrichtung abgelegten Grenzdrehzahl GDZ, wobei für den Fall, dass die gemessene aktuelle Motordrehzahl n unterhalb der Grenzdrehzahl GDZ liegt, in dem Schritt S3 eine Ansteuerung des Mengensteuerventils 3 gemäß den Fig. 4a bis 4d erfolgt. Diesbezüglich wird auf die obigen Ausführungen verwiesen.

Liegt eine Motordrehzahl n vor, die größer als oder gleich groß ist wie die Grenzdrehzahl GDZ, so wird in dem Schritt S4 der aktuelle Kraftstoffbedarf KSB in dem Common-Rail 1 gemessen. Dazu wird mittels des vorher genannten Drucksensors 15 der aktuelle Druck in dem Common-Rail 1 gemessen und der aktuelle Kraftstoffbedarf KSB in dem Common-Rail 1 durch einen Vergleich des erfassten Ist-Drucks mit einem vorbestimmten Soll-Druck ermittelt. Kennlinien für die zugeordneten Soll-Drücke können wiederum in der oben genannten Speichereinrichtung abgelegt sein.

Das mit dem Drucksensor verbundene Steuergerät ermittelt den aktuellen Kraftstoffbedarf KSB und steuert das Tastverhältnis der Ansteuerung des Mengensteuerventils 3 in Abhängigkeit dieses ermittelten aktuellen Kraftstoffbedarfs KSB.

Beispielsweise vergleicht das Steuergerät in dem Schritt S5 den ermittelten aktuellen Kraftstoffbedarf KSB mit einem ersten Schwellwert SW1. Ergibt der Vergleich in Schritt S5, dass der aktuelle Kraftstoffbedarf KSB größer als oder gleich groß wie der erste Schwellwert SW1 ist, so liegt ein hoher Kraftstoffbedarf in dem Common-Rail 1 vor, was in Fig. 3 durch den Bereich 2 graphisch darstellt ist.

In dem Bereich 2 erfolgt in dem Schritt S6 vorzugsweise eine Ansteuerung des Mengensteuerventils 3 gemäß den Fig. 7a und 7b. Die Ansteuerfrequenz zur Ansteuerung des Mengensteuerventils 3 wird gegenüber der in Fig. 4c dargestellten Grundfrequenz vorzugsweise derart auf den halben Wert reduziert, dass jeder zweite Förderhub FH der Hochdruckpumpe 2 mit einer Dauerbestromung gemäß Fig. 5a ausgeführt und somit als Vollförderhub VFH genutzt wird. Die dazwischen liegenden Förderhube FH der Hochdruckpumpe 2 werden als Regelhübe RH genutzt, wobei die Fördermenge bei diesen Regelhüben RH in Abhängigkeit des Ansteuerzeitpunktes geregelt wird, wie in den Fig. 7a und 7b dargestellt ist. Der Ansteuerzeitpunkt wird wiederum in Abhängigkeit des ermittelten aktuellen Kraftstoffbedarfs KSB durch das Steuergerät derart eingestellt, dass das erforderliche Tastverhältnis der Ansteuerung des Mengensteuerventils 3 für eine gewünschte Kraftstoffmengenförderung einen vorbestimmten Wert einnimmt.

Ergibt der Vergleich in Schritt S5, dass der aktuelle Kraftstoffbedarf KSB unterhalb des ersten Schwellwertes SW1 liegt, so wird in dem Schritt S7 ein Vergleich durchgeführt, ob der aktuelle Kraftstoffbedarf KSB kleiner als oder gleich groß ist wie ein zweiter Schwellwert SW2. In diesem Fall liegt ein niedriger aktueller Kraftstoffbedarf KSB in dem Common-Rail 1 vor, was in Fig. 3 durch den Bereich 3 graphisch dargestellt ist.

In dem Bereich 3 wird das Mengensteuerventil 3 gemäß den Fig. 8a und 8b angesteuert, wobei die Ansteuerfrequenz gegenüber der in Fig. 4c dargestellten Grundfrequenz wiederum vorzugsweise auf den halben Wert derart reduziert wird, dass jeder zweite Förderhub FH mit einer Nicht-Bestromung und somit als Nullförderhub NFH gemäß Fig. 6a und 6b ausgeführt wird. Die dazwischen liegenden Förderhübe FH der Hochdruckpumpe 2 werden analog zu dem Bereich 2 als Regelhübe RH genutzt, wobei die Fördermenge der Regelhübe RH wiederum durch den Ansteuerzeitpunkt mittels des Steuergerätes gesteuert wird, wie in den Fig. 8a und 8b ersichtlich ist.

Ergibt der Vergleich in Schritt S7, dass der aktuelle Kraftstoffbedarf KSB größer ist als der zweite Schwellwert SW2, so existiert ein mittlerer Kraftstoffbedarf vor, der als Bereich 4 gemäß Fig. 3 zwischen dem hohen Kraftstoffbedarfsbereich 2 und dem niedrigen Kraftstoffbedarfsbereich 3 liegt. In dem indifferenten Bereich 4 wird das Tastverhältnis der Ansteuerung des Mengensteuerventils 3 durch eine Mischsteuerung gesteuert, welche sich aus den Steuerbetriebe gemäß den Schritten S6 und S8 zusammensetzt, d.h. es wird vorzugsweise zwischen dem Steuerbetrieb gemäß Fig. 7 und dem Steuerbetrieb gemäß Fig. 8 hin- und hergeschaltet, bis der aktuelle Kraftstoffbedarf in dem Common-Rail 1 abgedeckt ist.

Durch das erfindungsgemäße Steuern von Tastverhältnis und Frequenz der Ansteuerung des Mengensteuerventils in Abhängigkeit des aktuelle Kraftstoffbedarfs Verfahren wird somit das Mengensteuerventil ab einer vorbestimmten Grenzdrehzahl mit einer gegenüber der Grundfrequenz verringerten Ansteuerfrequenz angesteuert, so dass auch bei hohen Motordrehzahlen eine phasengerichtete, genaue Ansteuerung gewährleistet wird. Da das erfindungsgemäße Verfahren keine Änderungen der Kraftstoffeinspritzanlage erfordert, kann es ohne Mehrkosten durch eine geeignete Umprogrammierung des Steuergerätes angewendet werden.

Es sei abschließend darauf hingewiesen, dass Kennfelder auch für das entsprechende dem jeweiligen Fahrverhalten des Kraftfahrzeuges zugeordnete Tastverhältnis der Ansteuerung des Mengensteuerventils sowie für die Schwellwerte SW1 und SW2 in der Speichereinrichtung vorteilhaft abgespeichert werden können.

Obwohl die vorliegende Erfindung anhand bevorzugter Ausführungsbeispiele vorstehend beschrieben wurde, ist die darauf nicht beschränkt, sondern auf vielfältige Weise modifizierbar.

Beispielsweise ist die vorliegende Erfindung nicht auf eine Nockenwelle mit vier Nocken bzw. auf vier Pumpenhübe während eines Arbeitsspiels beschränkt, sondern sie kann selbstverständlich auf eine beliebige Anzahl an Förderhüben während eines Arbeitsspiels angewendet werden.

## Patentansprüche

1. Verfahren zur Steuerung eines Kraftstoffeinspritzsystems für eine Brennkraftmaschine eines Fahrzeugs, wobei die Brennkraftmaschine einen Common-Rail (1), eine Hochdruckpumpe (2) und ein Mengensteuerventil (3) zur Steuerung der Kraftstoff-Fördermenge der Hochdruckpumpe (2) in den Common-Rail (1) aufweist, mit folgenden Verfahrensschritten:
Ermitteln des aktuellen Kraftstoffbedarfs (KSB) in dem Common-Rail (1) in Abhängigkeit des aktuellen Fahrzustandes des Fahrzeugs mittels einer Erfassungseinrichtung; und
Steuern des Tastverhältnisses der Ansteuerung des Mengensteuerventils (3) in Abhängigkeit des ermittelten aktuellen Kraftstoffbedarfs (KSB) in dem Common-Rail (1) mittels eines Steuergerätes, wobei die Steuerung zeitsynchron und unabhängig von dem Pumpenhub der Hochdruckpumpe (2) ausgeführt wird.

2. Verfahren nach Anspruch 1, **dadurch gekennzeichnet, dass** der aktuelle Kraftstoffbedarf (KSB) in dem Common-Rail (1) durch einen Vergleich des erfassten Kraftstoffdrucks mit einem Soll-Druck ermittelt wird, wobei der Kraftstoffdruck in dem Common-Rail (1) mittels der als Drucksensor (15) ausgebildeten Erfassungseinrichtung erfasst wird.

3. Verfahren nach Anspruch 1 oder 2, **dadurch gekennzeichnet, dass** die Brennkraftmaschine als Vier-Takt-Motor eines Kraftfahrzeuges und die Hochdruckpumpe (2) zum Ausführen mehrerer Förderphasen während eines Arbeitsspiels eines Zylinders der Brennkraftmaschine ausgebildet werden.

4. Verfahren nach Anspruch 2 oder 3, **dadurch gekennzeichnet dass**, das Tastverhältnis der Ansteuerung des Mengensteuerventils (3) in Abhängigkeit des erfassten Kraftstoffdrucks in dem Common-Rail (1) und in Abhängigkeit der Drehzahl (n) der Brennkraftmaschine gesteuert wird.

5. Verfahren nach wenigstens einem der vorhergehenden Ansprüche, **dadurch gekennzeichnet, dass** bis zu einer vorbestimmten Grenzdrehzahl (GDZ) der Brennkraftmaschine vier Förderhübe der Hochdruckpumpe (2) während eines Arbeitsspiels eines Zylinders vorgegeben werden, wobei das Mengensteuerventil (3) mit einer vorbestimmten Grundfrequenz in Abhängigkeit des Pumpenhubs der Hochdruckpumpe (2) gleichmäßig bzw. pumpenhubsynchron gesteuert wird.

6. Verfahren nach Anspruch 5, **dadurch gekennzeichnet, dass** ab der vorbestimmten Grenzdrehzahl (GDZ) der Brennkraftmaschine das Tastverhältnis der Ansteuerung des Mengensteuerventils (3) in Abhängigkeit des ermittelten aktuellen Kraftstoffbedarfs (KSB) in dem Common-Rail (1) zeitsynchron und unabhängig von dem Pumpenhub der Hochdruckpumpe (2) gesteuert wird.

7. Verfahren nach Anspruch 5 oder 6, **dadurch gekennzeichnet, dass** ab der vorbestimmten Grenzdrehzahl (GDZ) der Brennkraftmaschine die Frequenz zur Ansteuerung des Mengensteuerventils (3) gegenüber der vorbestimmten Grundfrequenz derart auf den halben Wert verringert wird, dass das Mengensteuerventil (3) lediglich bei jedem zweiten Förderhub der Hochdruckpumpe (2) angesteuert wird.

8. Verfahren nach wenigstens einem der Ansprüche 5 bis 7, **dadurch gekennzeichnet, dass** bei einem hohen Kraftstoffbedarf in dem Common-Rail (1) das Tastverhältnis der Ansteuerung des Mengensteuerventils (3) ab der vorbestimmten Grenzdrehzahl (GDZ) der Brennkraftmaschine derart gesteuert wird, dass das Mengensteuerventil (3) bei jedem zweiten Förderhub der Hochdruckpumpe (2) für einen Vollförderhub und bei den dazwischen liegenden Förderhüben der Hochdruckpumpe (2) für Regelhübe angesteuert wird.

9. Verfahren nach wenigstens einem der Ansprüche 5 bis 8, **dadurch gekennzeichnet, dass** bei einem niedrigen Kraftstoffbedarf in dem Common-Rail (1) das Tastverhältnis der Ansteuerung des Mengensteuerventils (3) ab der vorbestimmten Grenzdrehzahl (GDZ) der Brennkraftmaschine derart gesteuert wird, dass das Mengensteuerventil (3) bei jedem zweiten Förderhub der Hochdruckpumpe (2) für einen Nullförderhub und bei den dazwischen liegenden Förderhüben der Hochdruckpumpe (2) für Regelhübe angesteuert wird.

10. Verfahren nach Anspruch 9, **dadurch gekennzeichnet, dass** bei einem Kraftstoffzwischenbedarf zwischen dem hohen und dem niedrigen Kraftstoffbedarf in dem Common-Rail (1) das Tastverhältnis der Ansteuerung des Mengensteuerventils (3) der Brennkraftmaschine durch eine Mischsteuerung gesteuert wird, welche durch einen Wechselbetrieb der Steuerbetriebe gemäß den Patentansprüchen 8 und 9 zusammengesetzt wird.

11. Vorrichtung zur Steuerung eines Kraftstoffeinspritzsystems für eine Brennkraftmaschine eines Fahrzeuges, mit:
einem Common-Rail (1) mit einer Erfassungseinrichtung (15) zum Ermitteln des aktuellen Kraftstoffbedarfs (KSB) in dem Common-Rail (1) in Abhängigkeit des aktuellen Fahrzustandes des Fahrzeuges;
einer Hochdruckpumpe (2), welche zum Fördern eines Kraftstoffes in den Common-Rail (1) mit demselben verbunden ist;
einem Mengensteuerventil (3), welches zur Steuerung der Kraftstoff-Fördermenge der Hochdruckpumpe (2) in den Common-Rail (1) mit der Hochdruckpumpe (2) gekoppelt ist; und mit
einem Steuergerät, welches zum synchronen und von dem Pumpenhub der Hochdruckpumpe (2) unabhängigen Steuern des Tastverhältnisses der Ansteuerung des Mengensteuerventils (3) in Abhängigkeit des ermittelten aktuellen Kraftstoffbedarfs (KSB) in dem Common-Rail (1) mit der Erfassungseinrichtung (15) und dem Mengensteuerventil (3) verbunden ist.

12. Vorrichtung nach Anspruch 11, **dadurch gekennzeichnet, dass** die Erfassungseinrichtung (15) als Drucksensor zum Erfassen des Kraftstoffdrucks in dem Common-Rail (1) ausgebildet ist, wobei der aktuelle Kraftstoffbedarf (KSB) in dem Common-Rail (1) durch einen Vergleich des erfassten Kraftstoffdrucks mit einem Soll-Druck mittels des Steuergerätes ermittelbar ist.

13. Vorrichtung nach Anspruch 11 oder 12, **dadurch gekennzeichnet, dass** die Brennkraftmaschine als Vier-Takt-Motor eines Kraftfahrzeuges und die Hochdruckpumpe (2) zum Ausführen mehrerer Förderphasen während eines Arbeitsspiels eines Zylinders der Brennkraftmaschine ausgebildet sind.

14. Vorrichtung nach wenigstens einem der Ansprüche 11 bis 13, **dadurch gekennzeichnet, dass** die Hochdruckpumpe (2) und der Common-Rail (1) über eine Hochdruckleitung (14) miteinander verbunden sind.

15. Vorrichtung nach wenigstens einem der Ansprüche 11 bis 14, **dadurch gekennzeichnet, dass** das Mengensteuerventil (3) derart ausgebildet ist, dass es bei einer Bestromung durch das Steuergerät öffnet und bei einer Zurücknahme der Bestromung durch das Steuergerät schließt.
